# EUROPÄISCHE PATENTSCHRIFT

(11) **EP 3 100 070 B1**
(45) Veröffentlichungstag und Bekanntmachung des Hinweises auf die Patenterteilung: **12.06.2019**
(21) Anmeldenummer: 15704703.6
(22) Anmeldetag: 28.01.2015
(51) Int. Cl.: G01S 7/03, G01S 13/93, H01P 3/12, G01S 7/02

(54) **RADARSYSTEM ZUR UMFELDERFASSUNG FÜR EIN FAHRZEUG**
VEHICLE RADAR SYSTEM FOR DETECTING THE SURROUNDINGS
SYSTÈME DE RADAR PERMETTANT DE DÉTECTER L'ENVIRONNEMENT D'UN VÉHICULE

(30) Priorität: 31.01.2014 DE 102014201728
(43) Veröffentlichungstag der Anmeldung: 07.12.2016
(73) Patentinhaber: Conti Temic Microelectronic GmbH, 90411 Nürnberg (DE)
(72) Erfinder: MENGE, Michael, 81475 München (DE)
(86) Internationale Anmeldenummer: PCT/DE2015/200037
(87) Internationale Veröffentlichungsnummer: WO 2015/113566

(56) Entgegenhaltungen:
- EP-A1- 2 224 535
- US-A1- 2012 013 499

## Beschreibung

Die Erfindung betrifft ein Radarsystem zur Umfelderfassung für ein Fahrzeug.

Radarsysteme finden sich beispielsweise in sowohl geführten als auch autonomen Fahrzeugen, Baumaschinen oder Fertigungsanlagen. Insbesondere in von einem Fahrer geführten Fahrzeug ermitteln Radarsysteme Werte bestimmter Umgebungsparameter, beispielsweise einer Entfernung des Fahrzeuges zu einem anderen Objekt, wodurch beispielsweise die Entscheidungsfindung des Fahrers unterstützt oder auf Sicherheitsrisiken hingewiesen werden kann. Insbesondere Radarsysteme zur Abstandsmessung finden immer häufiger Verwendung, beispielsweise als Einparkhilfe oder Kollisionswarnsysteme in Fahrzeugen. Solche Radarsysteme werden insbesondere im Hochfrequenzbereich (HF-Bereich) betrieben, die eine HF-Elektronik mit entsprechenden HF-Bauteilen aufweisen, beispielsweise HF-Sender und -Empfänger sowie geeignete Antennen. Häufig sind zusätzlich weitere Radarsysteme sowie insbesondere weitere elektronische Systeme vorhanden, die durch von den HF-Bauteilen abgestrahlte Störsignale in ihrer Funktionalität beeinträchtigt werden. Um weiterhin eine Funktionalität möglicher anderer Systeme zu gewährleisten und entsprechende EMV-Normen einzuhalten ist es daher notwendig, insbesondere solche Bauteile, die ein Störsignal emittieren, gegenüber anderen Systemen abzuschirmen.

Hierzu ist es möglich, eine eine Anzahl von HF-Bauteilen aufweisende Platine derart mit einem Abschirmgehäuse zu versehen, dass die HF-Bauteile in einem von dem Abschirmgehäuse und der dem Abschirmgehäuse zugewandten Platinenseite, auch Platinenoberseite genannt, definierten Raum angeordnet sind. Insbesondere ist hierdurch auf der Platine ein Schirmbereich definiert. Das Abschirmgehäuse ist typischerweise aus einem elektrisch leitenden Material gefertigt. Zusätzlich ist häufig auf der dem Abschirmgehäuse abgewandten Platinenseite, auch Platinenunterseite genannt, eine Abschirmung derart ausgebildet, dass die HF-Bauteile im Wesentlichen vollständig von einem elektrisch leitenden Material umgeben sind.

Im Falle beispielsweise eines Radarsystems ist es jedoch notwendig, ein HF-Signal als Nutzsignal für eine Antenne außerhalb des Schirmbereiches bereitzustellen. Eine zusätzliche Öffnung im Abschirmgehäuse verschlechtert jedoch drastisch dessen Abschirmeigenschaften. Zur Vermeidung einer solchen Verschlechterung kann das Nutzsignal mittels einer sogenannten Stripline-Leitung unter dem Abschirmgehäuse hindurchgeführt werden. Nachteilig hierbei ist, dass zur Ausbildung der Stripline-Leitung ein Leiter innerhalb des Platinensubstrates ausgebildet sein muss, wodurch faktisch ein Mehrschichtsystem vorliegt, das heißt es sind zwei aufeinander angeordnete Substratschichten mit einer zwischen diesen Schichten angeordneten Leitung erforderlich. Zusätzlich werden innerhalb des Abschirmgehäuses häufig Mikrostreifenleiter verwendet, welche einfacher zu fertigen und platzsparender sind als Stripline-Leitungen, wodurch weiterhin ein Übergang von Mikrostreifenleiter zu Stripline-Leitung benötigt wird. Ein derartiger Übergang erzeugt jedoch nachteilige Reflexionsverluste, das heißt eine Abschwächung des Signals.

Alternativ kann das Nutzsignal auch von der obersten, die HF-Bauteile aufweisenden Schicht über Durchkontaktierungen auf eine bezüglich der Platinenoberseite darunter angeordnete zweite Substratschicht geleitet werden und mittels eines Mikrostreifenleiters unter dem Abschirmgehäuse hindurchzuführen. In anderen Worten: das Nutzsignal kann mittels eines auf einer tieferliegenden Substratschicht ausgebildeten Mikrostreifenleiters unter dem Abschirmgehäuse hindurchgeführt werden. Hierzu ist jedoch ein Übergang zwischen den verschiedenen Substratschichten notwendig. Auch solch ein Übergang ist nachteilig verlustbehaftet. Weiterhin ist nachteilig, dass beide Alternativen aufgrund des benötigten Mehrschichtsystems entsprechend aufwendig in der Fertigung sind.

Da zur Ausbildung von Schichten, die HF-Signale leiten, typischerweise ein im Vergleich zu herkömmlichem Platinensubstrat teureres HF-Substrat verwendet wird, sind beide Alternativen zusätzlich entsprechend kostenintensiv.

US 2012/0013499 A1 zeigt eine elektronische Schaltung für eine Radarvorrichtung mit einem Dichtgehäuse. Der Halbleiter auf dem Substrat und der Hohlleiter im Substrat werden durch das Dichtgehäuse überdeckt Das Dichtgehäuse schützt den Halbleiter vor mechanischer Einwirkung und leitet Wärme vom Halbleiter weg. EP 2 224 535 A1 zeigt eine elektronische Schaltung mit einer umlaufenden Leiterbahn. Ein Abschirmgehäuse ist mit dem umlaufenden Leiter verbunden und schirmt die Bauteile der elektronischen Schaltung ab.

Der Erfindung liegt die Aufgabe zugrunde ein Radarsystem umfassend eine Platine anzugeben, bei dem ein Herausführen von Nutzsignalen aus einem Schirmbereich bei guter Schirmwirkung vereinfacht ist.

Diese Aufgabe wird erfindungsgemäß gelöst durch ein Radarsystem mit den Merkmalen des Anspruchs 1. Vorteilhafte Ausgestaltungen, Weiterbildungen und Varianten sind Gegenstand der Unteransprüche.

Hierzu ist vorgesehen, dass ein Radarsystem, insbesondere zur Umfelderfassung für ein Fahrzeug, eine Platine aufweist, mit einer eine Oberseite und eine Unterseite umfassenden Substratschicht. Typischerweise sind auf der Oberseite der Substratschicht eine Anzahl von Schaltungsbauteilen, insbesondere HF-Bauteile, zur Realisierung einer elektronischen Schaltung angeordnet. Unter HF, das heißt Hochfrequenz, wird hierbei insbesondere ein Frequenzbereich von wenigen Gigahertz bis zu wenigen hundert Gigahertz verstanden. Desweiteren ist auf der Oberseite eine einen Schirmbereich umlaufende Leiterbahn aufgebracht, entlang welcher ein den Schirmbereich überdeckendes Abschirmgehäuse mit dieser Leiterbahn elektrisch leitend verbunden ist. Weiterhin ist in der Substratschicht wenigstens ein Hohlleiter angeordnet, der eine seitlich begrenzende Hohlleiterwand sowie eine obere und eine untere Leiterfläche aufweist, wobei die obere Leiterfläche ein Abschnitt der Leiterbahn ist. Weiterhin ist vorgesehen, dass die obere Leiterfläche des Hohlleiters ein Abschnitt der Leiterbahn ist. Mit anderen Worten: ein Teil der Leiterfläche ist zugleich Teil einer Begrenzung des Hohlleiters. Hierdurch wird ein Herausführen eines innerhalb des Schirmbereiches bereitgestellten Nutzsignals aus dem Schirmbereich heraus ermöglicht. Darunter wird insbesondere verstanden, dass ein erstes HF-Bauteil innerhalb des Schirmbereiches und ein zweites HF-Bauteil außerhalb des Schirmbereiches angeordnet sind und beide zur Übertragung des Nutzsignals miteinander geeignet verbunden sind.

Hierbei ist beispielsweise das erste HF-Bauteil ein Oszillator, das heißt ein Generator für ein HF-Signal und das zweite HF-Bauteil eine Antenne. Insbesondere ist dadurch ein Abschirmgehäuse ohne jegliche Öffnung zur Herausführung des Nutzsignales realisierbar, wodurch eine Abstrahlung von Signalen aus einem durch den Schirmbereich und das Abschirmgehäuse definierten Raum heraus reduziert oder gänzlich vermieden wird. Zusätzlich wird ebenso ein Eindringen von Störsignalen in diesen Raum reduziert oder vermieden.

Zusätzlich zur Substratschicht weist die Platine vorteilhaft weitere Substratschichten auf. Hierdurch wird insbesondere die Aufnahme weiterer Schaltungsbauteile ermöglicht. Insbesondere sind die Substratschichten aus unterschiedlichen Materialien gefertigt. Vorzugsweise sind die Substratschichten in einem Stapel angeordnet. Hierdurch ergibt sich insbesondere ein einfach zu fertigender Schichtaufbau der Platine. Insbesondere ist der Hohlleiter in der obersten Substratschicht angeordnet, vorzugsweise sind jegliche Hohlleiter ausschließlich in der obersten Substratschicht angeordnet. Hierdurch ergibt sich insbesondere ein kompakter und kostengünstiger Aufbau.

Auf der Oberseite umläuft die insbesondere geschlossene Leiterbahn den Schirmbereich insbesondere vollständig. Weiterhin ist das Abschirmgehäuse mit der Leiterbahn elektrisch leitend und insbesondere vollständig umlaufend verbunden, wodurch insbesondere beide ein gemeinsames elektrisches Potential aufweisen. Zur Herstellung einer elektrisch leitenden Verbindung ist das Abschirmgehäuse mit der Leiterbahn beispielsweise verlötet oder auf dieser mittels eines geeigneten Klebstoffs aufgeklebt. Desweiteren ist das Abschirmgehäuse vorteilhafterweise als Tiefziehteil gefertigt, wodurch sich insbesondere geringe Herstellungskosten ergeben.

Weiterhin ist der Hohlleiter insbesondere in der Substratschicht angeordnet und von den seitlichen Hohlleiterwänden sowie der oberen und der unterer Leiterfläche begrenzt. Unter Hohlleiter wird hierbei insbesondere eine Anzahl von Flächen und/oder Wänden und ein durch diese begrenzter Innenraum verstanden. Insbesondere ist der Hohlleiter zur Übertragung eines elektromagnetischen Signals ausgebildet, insbesondere von dem ersten HF-Bauteil zu dem zweiten HF-Bauteil. Das Signal ist typischerweise ein hochfrequentes Nutzsignal, insbesondere mit einer Frequenz von mehreren zehn Gigahertz, beispielsweise im Bereich von 70-80 GHz. Hierzu weist der Hohlleiter insbesondere zwei Enden auf, welche jeweils direkt oder mittels einer oder mehrerer weiterer Leitungen mit dem ersten beziehungsweise dem zweiten HF-Bauteil verbunden sind. In einer bevorzugten Ausgestaltung ist wenigstens eine dieser weiteren Leitungen als Mikrostreifenleiter ausgebildet. Hierdurch ergibt sich insbesondere ein kompakteres Schaltungslayout im Vergleich zu einer ausschließlich auf Hohlleitern basierenden Schaltung. Zur Verbindung eines Mikrostreifenleiters und eines Hohlleiters ist zweckdienlicherweise ein geeigneter Übergang vorgesehen, um eine möglichst effiziente Übertragung des Nutzsignals zu gewährleisten.

In einer vorteilhaften Weiterbildung ist der Hohlleiter möglichst lang ausgebildet, insbesondere weist der Hohlleiter eine Länge und eine Breite auf und die Länge ist größer als die Breite. Da die Sperrwirkung mit zunehmender Länge des Hohlleiters ebenfalls zunimmt, ist jene Sperrwirkung hierdurch insbesondere verbessert. Beispielsweise ist der Hohlleiter mehrere zehn Millimeter lang und wenige Millimeter breit, das heißt insbesondere länger als breit. Zusätzlich ist der Hohlleiter insbesondere S-förmig ausgebildet.

In einer bevorzugten Ausgestaltung ist die Hohlleiterwand durch ein leitendes Material gebildet. Das leitende Material ist beispielsweise Kupfer. Hierdurch wird insbesondere ein Verlust durch Abstrahlung durch die Hohlleiterwände aus dem Hohlleiter heraus reduziert.

Geeigneterweise ist das leitende Material derart angeordnet, dass dieses die obere Leiterfläche und die untere Leiterfläche nach Art einer Durchkontaktierung elektrisch leitend verbindet. Dadurch wird insbesondere der Verlust durch Abstrahlung über die Hohlleiterwände zusätzlich reduziert. Unter Durchkontaktierung wird hierbei allgemein eine leitende Verbindung von zwei nichtidentischen Ebenen verstanden, die im Wesentlichen parallel zur Platinenoberseite sind (und damit typischerweise auch zur Platinenunterseite). Weiterhin werden hierdurch die obere und die untere Leiterfläche sowie die Hohlleiterwände auf ein gemeinsames elektrisches Potential gebracht, wodurch insbesondere die Übertragung des Signals durch den Hohlleiter verbessert wird.

In einer weiteren bevorzugten Ausgestaltung ist in die Substratschicht zur Ausbildung der Hohlleiterwand eine Anzahl von Aussparungen eingebracht. Hierdurch wird insbesondere ein einfaches Einbringen des leitenden Materials zwischen Ober- und Unterseite der Substratschicht ermöglicht. Beispielsweise sind die Aussparungen durch Fräsen oder Ätzen in die Substratschicht eingebrachte Gräben (sogenannte Grooves), die sich jeweils entlang des Hohlleiters erstrecken. In einer bevorzugten Ausführungsform sind die Aussparungen insbesondere runde Löcher (sogenannte Vias), auf deren jeweiliger Innenwand wenigstens teilweise, vorzugsweise jedoch vollständig, das leitende Material aufgebracht ist. Beispielsweise ist das leitende Material in Form einer Hülse oder eines Stiftes in die jeweilige Aussparung eingesetzt oder eingepresst. Alternativ ist das leitende Material mittels eines Abscheidungsverfahrens auf der Innenwand aufgebracht.

In einer vorteilhaften Weiterbildung sind die Aussparungen entlang des Hohlleiters in einem mittleren Abstand von wenigstens 0,5 mm und höchstens 4 mm angeordnet. Hierdurch wird insbesondere die möglichst störungsfreie Übertragung eines Signals mit einer für Radaranwendungen geeignet ausgewählten Frequenz gewährleistet.

In einer bevorzugten Ausgestaltung sind die Aussparungen zylinderförmige Löcher, die im Wesentlichen äquidistant entlang der Hohlleiterwände und in der Substratschicht angeordnet sind, beispielsweise mit einem Abstand von wenigen Millimetern. Hierdurch wird insbesondere eine Fertigung der Hohlleiterwände mittels an sich bekannter und zur Kontaktierung mehrerer Leiterschichten einer Platine verwendeter Durchkontaktierungen (Vias) ermöglicht. Diese umfassen typischerweise eine Bohrung, deren Innenwand anschließend wie bereits oben genannt metallisiert wird. Dabei sind hier insbesondere durchgängige, alternativ oder zusätzlich jedoch auch sogenannte blinde Durchkontaktierungen vorgesehen, das heißt in die Platine eingebrachte, innenwändig metallisierte Sacklöcher.

In einer geeigneten Weiterbildung sind die Aussparungen insbesondere metallisierte Durchgangslöcher bezüglich der Substratschicht. Darunter wird verstanden, dass die Aussparungen durchgängig von der Oberseite der Substratschicht zu deren Unterseite ausgebildet sind. Hierdurch wird insbesondere eine durchgängige Metallisierung ermöglicht, wodurch die obere und die untere Leiterfläche insbesondere elektrisch leitend verbunden werden.

Vorteilhafterweise ist der Hohlleiter zusätzlich ein Hochpass mit einer Sperrwirkung gegenüber mittels des Hohlleiters übertragener Signale mit insbesondere niedrigerer Frequenz als eine Nutzfrequenz, wodurch diese niederfrequenten Signale unterdrückt werden. Unter Nutzfrequenz wird hierbei insbesondere eine Frequenz des Nutzsignals verstanden. Beispielsweise liegt die Nutzfrequenz im Bereich mehrerer zehn Gigahertz und die niederfrequenten Signale liegen im Bereich weniger zehn Gigahertz. Desweiteren wird unter Sperrwirkung verstanden, dass Signale einer ersten Frequenz, hier insbesondere Frequenzen, die niedriger sind als die Nutzfrequenz, bei einer Übertragung größere Verluste erfahren als Signale einer zweiten Frequenz, hier insbesondere der Nutzfrequenz. Vorteilhafterweise ist die Sperrwirkung durch geeignete Ausgestaltung der Hohlleiterwände einstellbar. Hierdurch kann die Sperrwirkung insbesondere an die jeweilige Nutzfrequenz angepasst werden. Im Fall von Hohlleiterwänden, die durch in einem regelmäßigen Abstand angeordnete Durchkontaktierungen ausgebildet sind, ist die Sperrwirkung beispielsweise durch geeignete Wahl des Abstandes einstellbar.

Bevorzugterweise ist die Substratschicht aus einem HF-Substrat gefertigt, das zur Übertragung von HF-Signalen ausgebildet ist, und der Hohlleiter weist einen Innenraum auf, der mit dem HF-Substrat gefüllt ist. Hierdurch wird insbesondere die Übertragung des Nutzsignals durch den Hohlleiter verbessert.

In einer vorteilhaften Ausgestaltung weist die Platine eine Massefläche auf und die untere Leiterfläche ist ein Teil dieser Massefläche. Durch die Mehrfachnutzung einer als Massefläche vorgesehenen Leiterfläche, insbesondere auf der Unterseite der Substratschicht, entfällt ein zusätzlicher Prozessschritt zur Herstellung der unteren Leiterfläche des Hohlleiters, wodurch die Herstellung insgesamt vereinfacht wird.

In einer weiteren vorteilhaften Ausgestaltung ist die Massefläche wenigstens so groß wie der Abschirmbereich, ist also bezüglich der Substratschicht gegenüberliegend zu einer von der Leiterbahn eingegrenzten Fläche und diese überdeckend angeordnet. In Kombination mit dem Abschirmgehäuse und einer elektrisch leitenden Verbindung von Massefläche, Leiterbahn und Abschirmgehäuse wird hierdurch insbesondere die Abschirmung von Signalen, insbesondere Störsignalen, der in dem Schirmbereich angeordneten Elektronik verbessert.

Geeigneterweise ist auch jener Teil der Leiterbahn, der nicht gleichzeitig obere Leiterfläche eines Hohlleiters ist, durch ein in die Substratschicht eingebrachtes leitendes Material, bevorzugterweise in Form von Durchkontaktierungen, elektrisch leitend mit der Massefläche verbunden. Hierdurch wird eine Abstrahlung von Störsignalen durch die Substratschicht und aus dem Schirmbereich heraus reduziert oder vermieden und dadurch insbesondere die Abschirmung verbessert. Dagegen ist der Innenraum des Hohlleiters bevorzugterweise frei von Durchkontaktierungen und die obere sowie die untere Leiterfläche sind entlang des Hohlleiters entsprechend durchgehend ausgebildet. Hierdurch ist insbesondere eine verbesserte Übertragung des Nutzsignals mittels des Hohlleiters gewährleistet.

Vorteilhafterweise ist ein Radarsystem in einer der vorgenannten Ausführungen ein Teil eines Fahrzeuges. Hierdurch ist insbesondere eine Störung von weiteren Fahrzeugsystemen durch von der in dem Schirmbereich angeordneten Elektronik emittierten HF-Signale reduziert oder gänzlich vermieden. Zusätzlich ist insbesondere eine Übertragung von Signalen mit einer niedrigeren Frequenz als der des Nutzsignals in den Schirmbereich unterdrückt. Desweiteren ist insbesondere eine Einhaltung einer auf in Fahrzeugen verbaute Systeme anzuwendenden EMV-Norm möglich.

Die mit der Erfindung erzielten Vorteile bestehen insbesondere darin, dass eine Platine für ein Radarsystem einen Schirmbereich mit in diesem angeordneten HF-Bauteilen derart aufweist, dass ein Nutzsignal lediglich über einen hierfür vorgesehenen Hohlleiter aus dem Schirmbereich geführt ist und jegliche sonstige Abstrahlung von Signalen unterdrückt ist, das heißt, der Schirmbereich im Wesentlichen komplett abgeschirmt ist. Insbesondere ist eine Störung von außerhalb des Schirmbereiches angeordneten und insbesondere dem Radarsystem zugehörigen Antennen durch ein von einem innerhalb des Schirmbereiches angeordneten HF-Bauteil emittierten, also nicht über den Hohlleiter übertragenes, Signal unterdrückt. Desweiteren ist der Hohlleiter ein sogenannter Substrate Integrated Waveguide (SIW, das heißt ein in ein Substrat integrierter Hohlleiter). Weiterhin ist auch ein Eindringen von Signalen in den Schirmbereich von außen her unterdrückt. Zusätzlich ist der Hohlleiter ein Hochpass und ein Eindringen von niedrigfrequenten Signalen, beispielsweise Mobilfunkfrequenzen, in den Schirmbereich über den Hohlleiter ist ebenfalls unterdrückt. Desweiteren weist die Platine lediglich eine aus einem HF-Substrat gefertigte Substratschicht auf, wodurch Fertigungsaufwand und -kosten reduziert sind.

Ein weiterer Vorteil ist, dass der Schirmbereich von einem Abschirmgehäuse überdeckt ist, wobei dieses vollständig mit einer den Schirmbereich umlaufenden Leiterbahn elektrisch leitend verbunden ist. Dabei sind keine weiteren Öffnungen zur Durchführung von Leitungen notwendig, wodurch der Fertigungsaufwand weiter reduziert ist. Zusätzlich ist das Abschirmgehäuse als Tiefziehteil gefertigt.

Ein weiterer Vorteil ist, dass der Hohlleiter insbesondere zwei Hohlleiterwände aufweist, die mittels Durchkontaktierungen in der Substratschicht ausgebildet sind. Desweiteren sind die Durchkontaktierungen innenwändig metallisierte Durchgangslöcher, wodurch sich die Hohlleiterwände einfach fertigen lassen. Weiterhin sind die Durchgangslöcher entlang des Hohlleiters in einem regelmäßigen Abstand angeordnet. Zusätzlich weist der Hohlleiter eine obere und eine untere Leiterfläche auf, welche in Kombination mit den Hohlleiterwänden den Hohlleiter begrenzen. Vorteilhaft ist, dass die Leiterflächen mittels der Durchkontaktierungen elektrisch leitend verbunden sind und ein gemeinsames elektrisches Potential aufweisen. Zusätzlich ist die untere Leiterfläche ein Teil einer Massefläche, wodurch der Hohlleiter von einem Massepotential begrenzt ist. Desweiteren ist die obere Leiterfläche ein Teil der den Schirmbereich umlaufenden Leiterbahn. Dadurch sind die Leiterflächen des Hohlleiters in einfacher Weise durch auf der Platine ohnehin vorhandene Leiterflächen gebildet, wodurch der Fertigungsaufwand reduziert ist.

Nachfolgend werden Ausführungsbeispiele der Erfindung anhand einer Zeichnung näher erläutert. Darin zeigen:
- Fig. 1: eine schematische Darstellung eines Radarsystems mit einer Platine und einem Abschirmgehäuse,
- Fig. 2: in Draufsicht einen Teil eines Schaltungslayouts auf der Platine nach Fig. 1,
- Fig. 3: einen Ausschnitt des Schaltungslayouts nach Fig. 2 mit einem Hohlleiter,
- Fig. 4: in Schnittdarstellung die oberste Substratschicht der Platine nach Fig. 1 mit ausschnittsweise dargestelltem Abschirmgehäuse.

Einander entsprechende Teile sind in allen Figuren mit den gleichen Bezugszeichen versehen.

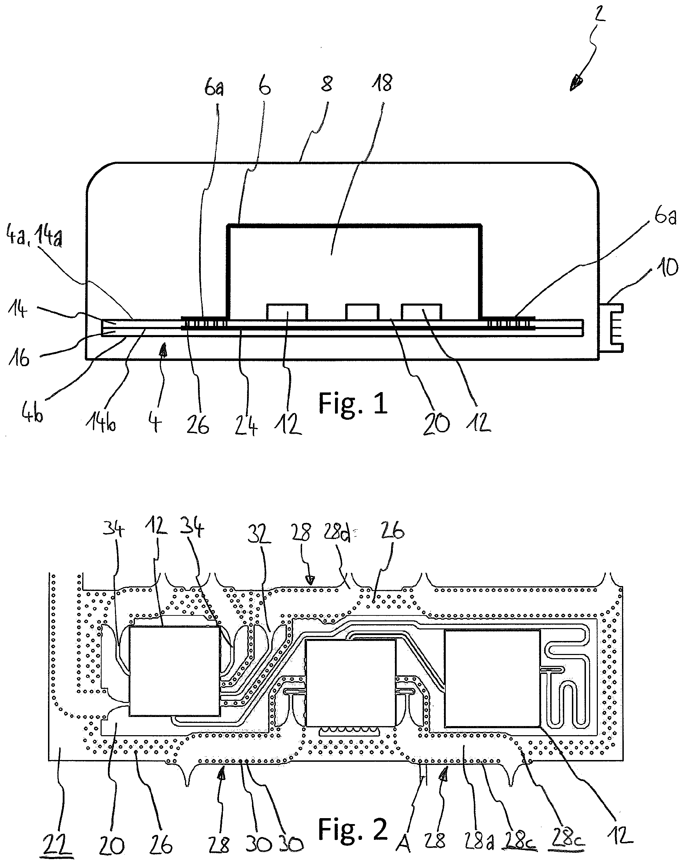

Fig. 1 zeigt eine schematische Darstellung eines Radarsystems 2 mit einer Platine 4 und einem Abschirmgehäuse 6. Das Radarsystem 2 umfasst ein Gehäuse 8, welches zusätzlich einen Anschluss 10 aufweist, über den das Radarsystem 2 beispielsweise mit weiteren Systemen zwecks Datenaustausch verbunden ist. Die Platine 4 umfasst eine Platinenoberseite 4a, auf der eine Anzahl von HF-Bauteilen 12 angeordnet ist, sowie eine Platinenunterseite 4b. Die Platine 4 ist typischerweise ein Mehrschichtsystem und umfasst mehrere Substratschichten 14,16. In Fig. 1 sind lediglich zwei Substratschichten 14,16 dargestellt. Die Platinenoberseite 4a entspricht dabei der Oberseite 14a der ersten (auch oberen) Substratschicht 14, auf der die HF-Bauteile 12 angeordnet sind. Die Unterseite 14b ist zu der zweiten (auch unteren) Substratschicht 16 hin gewandt und liegt damit innerhalb der Platine 4. Die obere Substratschicht 14 ist aus einem HF-Substrat gefertigt, die untere Substratschicht 16 ist aus einem im Vergleich dazu günstigeren, herkömmlichen Substrat gefertigt. Auf der Platinenunterseite 4b sind üblicherweise zusätzliche, hier nicht gezeigte elektronische Bauteile angeordnet. Auf der Platinenoberseite 4a ist weiterhin das Abschirmgehäuse 6 derart angeordnet, dass die HF-Bauteile 12 in einem von diesem und der Platinenoberseite 4a definierten Raum 18 eingehaust sind. Durch diesen ist auf der Platine 4 weiterhin ein Schirmbereich 20 definiert. Dieser ist von einer hier nicht gezeigten Leiterbahn 22 auf der Platinenoberseite 4a umlaufen. Weiterhin weist das Abschirmgehäuse 6 eine Umrandung 6a auf, die im Wesentlichen der Leiterbahn 22 folgt und mit dieser elektrisch leitend verbunden ist. Die Umrandung 6a ist hier mittels eines Falzes ausgebildet und liegt auf der Platinenoberseite 4a auf. Die Umrandung 6a und die Leiterbahn 22 können dabei entweder unterschiedlich breit oder gleich breit sein. In einer hier nicht gezeigten alternativen Ausführungsform ist die Umrandung 6a eine auf der Platinenoberseite 4a aufliegende und den Schirmbereich 20 umlaufende Kante. Weiterhin ist auf der Unterseite 14b der oberen Substratschicht 14 eine dem Schirmbereich 20 gegenüberliegende und diesen überdeckende Massefläche 24 angeordnet. Die Massefläche 24 und die Leiterbahn 22 sind mittels einer Anzahl von Durchkontaktierungen 26 elektrisch leitend verbunden. Diese sind hier als in die obere Substratschicht 14 eingebrachte, innenwändig metallisierte, zylindrische Durchgangslöcher ausgeführt, sogenannte Vias.

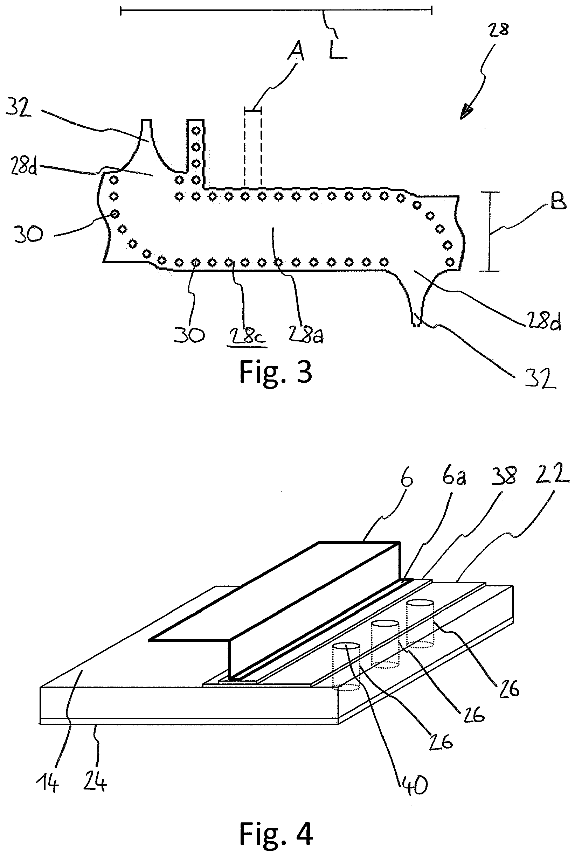

Die Fig. 2 und 3 zeigen in Draufsicht einen Teil eines Schaltungslayouts auf der Platine 4 nach Fig. 1. Deutlich sichtbar ist die hier nach Art einer Lötspur ausgebildete Leiterbahn 22, die den Schirmbereich 20 vollständig umschließt, in welchem die HF-Bauteile 12 angeordnet sind. Die Leiterbahn 22 ist mittels der weitgehend vollständig umlaufend in die obere Substratschicht 14 (im Folgenden einfach Substratschicht genannt) eingebrachten Durchkontaktierungen 26 mit der Massefläche 24 elektrisch leitend verbunden, wie dies insbesondere auch in Fig. 1 zu erkennen ist.

In der Substratschicht 14 sind mehrere Hohlleiter 28 (hier SIWs, substrate integrated waveguides) derart angeordnet, dass diese jeweils eine obere Leiterfläche 28a, welche ein Teil der Leiterbahn 22 ist, und eine hier nicht gezeigte untere Leiterfläche 28b, welche jeweils ein Teil der Massefläche 24 ist, aufweisen. Jene Teile der Leiterbahn 22, die gleichzeitig obere Leiterfläche 28a des Hohlleiters 28 sind, sind hierbei frei von Durchkontaktierungen 26. Jeder Hohlleiter 28 umfasst zusätzlich zwei Hohlleiterwände 28c, die durch Aussparungen 30 ausgebildet sind. In dem hier gezeigten Ausführungsbeispiel sind die Aussparungen 30 entlang des Hohlleiters 28 in einem regelmäßigem Abstand A in die Substratschicht 14 eingebrachte Durchkontaktierungen 26. Auch diese Durchkontaktierungen 26 verbinden die jeweilige obere Leiterfläche 28a, das heißt auch die Leiterbahn 22, elektrisch leitend mit der jeweiligen unteren Leiterfläche 28b, das heißt auch mit der Massefläche 24. Die Hohlleiterwände 28c in Kombination mit den beiden Leiterflächen 28a, 28b definieren einen Innenraum, der hier insbesondere frei von Durchkontaktierungen 26 ist. Dies ist besonders in Fig. 3 verdeutlicht, die einen Hohlleiter 28 mit einer Breite B und einer Länge L zeigt, der sich im Wesentlichen entlang der Leiterbahn 22 erstreckt und S-förmig ist. Weiterhin ist die Länge L des in Fig. 3 gezeigten Hohlleiters 28 größer als dessen Breite B. Desweiteren zeigt Fig. 1, dass jeweils ein Ende 28d jedes Hohlleiters 28 außerhalb und eines innerhalb des Schirmbereiches 20 angeordnet ist. Eine Anzahl der Enden 28d ist hier weiterhin mit einem Übergangsbereich 32 vom Hohlleiter 28 zu einem jeweiligen Mikrostreifenleiter 34 auf der Oberseite 14a versehen. Die hier nicht gezeigten Mikrostreifenleiter außerhalb des Schirmbereiches 20 sind beispielsweise mit hier ebenfalls nicht dargestellten Antennen oder sonstigen Bauteilen verbunden. Innerhalb des Schirmbereiches 20 verbinden Mikrostreifenleiter 34 die innenliegenden Übergangsbereiche 32 mit den HF-Bauteilen 12. Zusätzlich sind zur Abschirmung einiger der Mikrostreifenleiter 34 gegeneinander weitere Leiterstreifen 36 mit Durchkontaktierungen 26 im Schirmbereich 20 vorgesehen.

Fig. 4 zeigt in Schnittdarstellung die oberste Substratschicht 14 der Platine 4 nach Fig. 1, einen Teil der Leiterbahn 22 und einen Ausschnitt des darauf mittels eines leitenden Klebstoffes 38 oder alternativ auch mittels Lötzinn angebrachten Abschirmgehäuses 6. Die Substratschicht 14 ist aus einem HF-Substrat gefertigt in das die Durchkontaktierungen 26 eingebracht sind, welche innenwändig mit einem leitenden Material 40 versehen sind. Auf diese Weise stellen die Durchkontaktierungen 26 eine elektrisch leitende Verbindung von der Leiterbahn 22 und der auf der Unterseite 14b der Substratschicht 14 angebrachter Massefläche 24 her.

### Bezugszeichenliste

- 2: Radarsystem
- 4: Platine
- 4a: Platinenoberseite
- 4b: Platinenunterseite
- 6: Abschirmgehäuse
- 6a: Umrandung (des Abschirmgehäuses)
- 8: Gehäuse (Radarsystem)
- 10: Anschluss
- 12: HF-Bauteil
- 14: erste (auch obere) Substratschicht
- 14a: Oberseite
- 14b: Unterseite
- 16: zweite (auch untere) Substratschicht
- 18: Raum
- 20: Schirmbereich
- 22: Leiterbahn
- 24: Massefläche
- 26: Durchkontaktierung
- 28: Hohlleiter
- 28a: obere Leiterfläche
- 28b: untere Leiterfläche
- 28c: Hohlleiterwand
- 28d: Ende (des Hohlleiters)
- 30: Aussparungen
- 32: Übergangsbereich
- 34: Mikrostreifenleiter
- 36: Leiterstreifen (mit Durchkontaktierungen)
- 38: Klebstoff
- 40: leitendes Material
- A: Abstand
- B: Breite (des Hohlleiters)
- L: Länge (des Hohlleiters)

## Patentansprüche

1. Radarsystem (2) zur Umfelderfassung für ein Fahrzeug, das eine Platine (4) aufweist, mit einer eine Oberseite (14a) und eine Unterseite (14b) umfassenden Substratschicht (14), mit einer auf der Oberseite (14a) aufgebrachten und einen Schirmbereich (20) umlaufenden Leiterbahn (22), entlang welcher ein den Schirmbereich (20) überdeckendes Abschirmgehäuse (6) mit dieser Leiterbahn (22) elektrisch leitend verbunden ist, und mit wenigstens einem in der Substratschicht (14) angeordneten Hohlleiter (28), der eine seitlich begrenzende Hohlleiterwand (28c) sowie eine obere und eine untere Leiterfläche (28a, 28b) aufweist, **dadurch gekennzeichnet, dass** die obere Leiterfläche (28a) ein Abschnitt der Leiterbahn (22) ist.

2. Radarsystem (2) nach Anspruch 1,
**dadurch gekennzeichnet,**
**dass** der Hohlleiter (28) eine Länge (L) und eine Breite (B) aufweist und die Länge (L) größer ist als die Breite (B).

3. Radarsystem (2) nach einem der vorhergehenden Ansprüche,
**dadurch gekennzeichnet,**
**dass** die Hohlleiterwand (28c) durch ein leitendes Material (40) gebildet ist.

4. Radarsystem (2) nach Anspruch 3,
**dadurch gekennzeichnet,**
**dass** das leitende Material (40) die obere Leiterfläche (28a) und die untere Leiterfläche (28b) nach Art einer Durchkontaktierung (26) elektrisch leitend verbindet.

5. Radarsystem (2) nach einem der vorhergehenden Ansprüche,
**dadurch gekennzeichnet,**
**dass** in die Substratschicht (14) zur Ausbildung der Hohlleiterwand (28c) eine Anzahl von Aussparungen (30) eingebracht ist.

6. Radarsystem (2) nach Anspruch 5,
**dadurch gekennzeichnet,**
**dass** die Aussparungen (30) entlang des Hohlleiters (28) in einem mittleren Abstand (A) von wenigstens 0,5 mm und höchstens 4 mm angeordnet sind.

7. Radarsystem (2) nach Anspruch 5 oder 6,
**dadurch gekennzeichnet,**
**dass** die Aussparungen (30) Durchgangslöcher bezüglich der Substratschicht (14) sind.

8. Radarsystem (2) nach einem der vorhergehenden Ansprüche,
**dadurch gekennzeichnet,**
**dass** der Hohlleiter (28) als Hochpass ausgebildet ist, mit einer Sperrwirkung für Signale einer Frequenz, die niedriger ist als eine Nutzfrequenz.

9. Radarsystem (2) nach einem der vorhergehenden Ansprüche,
**dadurch gekennzeichnet,**
**dass** die Substratschicht (14) aus einem HF-Substrat gefertigt ist, das zur Übertragung von HF-Signalen ausgebildet ist, und, dass der Hohlleiter (28) einen Innenraum aufweist, der mit dem HF-Substrat gefüllt ist.

10. Radarsystem () nach einem der vorhergehenden Ansprüche,
**dadurch gekennzeichnet,**
**dass** die Platine (4) eine Massefläche (24) aufweist und die untere Leiterfläche (28b) zumindest ein Teil der Massefläche (24) ist.

11. Radarsystem (2) nach Anspruch 10,
**dadurch gekennzeichnet,**
**dass** die Massefläche (24) wenigstens so groß ist wie der Schirmbereich (20).

12. Radarsystem (2) nach einem der vorhergehenden Ansprüche, welches ein Teil eines Fahrzeuges ist.

## Claims

1. A radar system (2) for detecting the surroundings for a vehicle, having a printed circuit board (4) with a substrate layer (14) comprising an upper side (14a) and an underside (14b), with a conductor track (22) which is mounted on the upper side (14a) and which surrounds a shielded area (20) and along which a shielding housing (6) covering the shielded area (20) is electrically conductively connected to this conductor track (22), and with at least one waveguide (28) which is arranged in the substrate layer (14) and which has a laterally limiting waveguide wall (28c) and a top conductor surface (28a) and a bottom conductor surface (28b), **characterized in that** the top conductor surface (28a) is a section of the conductor track (22).

2. The radar system (2) according to Claim 1,
**characterized in**
**that** the waveguide (28) has a length (L) and a width (B), and the length (L) is greater than the width (B).

3. The radar system (2) according to any one of the preceding claims, **characterized in that** the waveguide wall (28c) is formed by a conductive material (40).

4. The radar system (2) according to Claim 3,
**characterized in**
**that** the conductive material (40) electrically conductively connects the top conductor surface (28a) and the bottom conductor surface (28b) in the manner of a via (26).

5. The radar system (2) according to any one of the preceding claims,
**characterized in**
**that** a number of cutouts (30) is incorporated in the substrate layer (14) for forming the waveguide wall (28c).

6. The radar system (2) according to Claim 5,
**characterized in**
**that** the cutouts (30) are arranged along the waveguide (28) with an average space (A) of at least 0.5 mm and, at most, 4 mm.

7. The radar system (2) according to Claim 5 or 6,
**characterized in**
**that** the cutouts (30) are through-holes with respect to the substrate layer (14).

8. The radar system (2) according to any one of the preceding claims,
**characterized in**
**that** the waveguide (28) is configured as a highpass with a blocking effect for signals at a frequency that is lower than a useful frequency.

9. The radar system (2) according to any one of the preceding claims,
**characterized in**
**that** the substrate layer (14) is made from a HF substrate which is configured to transmit HF signals, and in that the waveguide (28) has an interior space which is filled with the HF substrate.

10. The radar system (2) according to any one of the preceding claims,
**characterized in**
**that** the printed circuit board (4) has a grounding surface (24) and the bottom conductor surface (28b) is at least part of the grounding surface (24).

11. The radar system (2) according to Claim 10,
**characterized in**
**that** the grounding surface (24) is at least the same size as the shielded area (20).

12. The radar system (2) according to any one of the preceding claims, which is part of a vehicle.

## Revendications

1. Système de radar (2) permettant de détecter l'environnement d'un véhicule et comportant une platine (4), dotée d'une couche de substrat (14) comprenant une face supérieure (14a) et une face inférieure (14b), d'un circuit conducteur (22) appliqué sur la face supérieure (14a) et entourant une zone de blindage (20), le long duquel une boîte de blindage (6) recouvrant la zone de blindage (20) est raccordée de manière électriquement conductrice audit circuit conducteur (22), et d'au moins un guide d'ondes (28) disposé dans la couche de substrat (14), lequel comporte une paroi de guide d'ondes (28c) formant une limite latérale ainsi qu'une surface de guide supérieure et inférieure (28a, 28b), **caractérisé en ce que** la surface de guide supérieure (28a) est un segment du circuit conducteur (22).

2. Système de radar (2) selon la revendication 1,
**caractérisé en ce que**
le guide d'ondes (28) présente une longueur (L) et une largeur (B) et la longueur (L) est supérieure à la largeur (B).

3. Système de radar (2) selon l'une quelconque des revendications précédentes,
**caractérisé en ce que**
la paroi de guide d'ondes (28c) est formée par un matériau conducteur (40).

4. Système de radar (2) selon la revendication 3,
**caractérisé en ce que**
le matériau conducteur (40) raccorde la surface de guide supérieure (28a) et la surface de guide inférieure (28b) de manière électriquement conductrice à la façon d'une connexion transversale (26).

5. Système de radar (2) selon l'une quelconque des revendications précédentes,
**caractérisé en ce que**
un certain nombre d'évidements (30) est ménagé dans la couche de substrat (14) pour former la paroi de guide d'ondes (28c).

6. Système de radar (2) selon la revendication 5,
**caractérisé en ce que**
les évidements (30) sont disposés le long du guide d'ondes (28) avec un écart (A) moyen d'au moins 0,5 mm et au plus 4 mm.

7. Système de radar (2) selon la revendication 5 ou 6,
**caractérisé en ce que**
les évidements (30) sont des trous traversants par rapport à la couche de substrat (14).

8. Système de radar (2) selon l'une quelconque des revendications précédentes,
**caractérisé en ce que**
le guide d'ondes (28) est réalisé sous la forme d'un passe-haut, avec un effet suppresseur des signaux d'une fréquence qui est inférieure à une fréquence utile.

9. Système de radar (2) selon l'une quelconque des revendications précédentes,
**caractérisé en ce que**
la couche de substrat (14) est fabriquée à partir d'un substrat HF, qui est réalisé pour transmettre des signaux HF et **en ce que** le guide d'ondes (28) comporte un espace intérieur, qui est rempli du substrat HF.

10. Système de radar (2) selon l'une quelconque des revendications précédentes,
**caractérisé en ce que**
la platine (4) comporte une surface de masse (24) et la surface de guide inférieure (28b) est au moins une partie de la surface de masse (24).

11. Système de radar (2) selon la revendication 10,
**caractérisé en ce que**
la surface de masse (24) est au moins aussi grande que la zone de blindage (20).

12. Système de radar (2) selon l'une quelconque des revendications précédentes, qui fait partie d'un véhicule.
